# FASCICULE DE BREVET EUROPEEN

(11) **EP 2 938 414 B1**
(45) Date de publication et mention de la délivrance du brevet: **02.09.2020**
(21) Numéro de dépôt: 13744729.8
(22) Date de dépôt: 11.07.2013
(51) Int. Cl.: B01D 3/14, F25J 3/02, F25J 3/06, F25J 5/00

(54) **PROCÉDÉ ET APPAREIL DE SÉPARATION D'UN GAZ RICHE EN DIOXYDE DE CARBONE**
VERFAHREN UND VORRICHTUNG ZUR ABSCHEIDUNG EINES KOHLENDIOXIDREICHEN GASES
METHOD AND APPARATUS FOR SEPARATING A CARBON DIOXIDE-RICH GAS

(30) Priorité: 13.07.2012 FR 1256785
(43) Date de publication de la demande: 04.11.2015
(73) Titulaire: L'Air Liquide Société Anonyme pour l'Etude et l'Exploitation des Procédés Georges Claude, 75007 Paris (FR)
(72) Inventeur: DAVIDIAN, Benoit, F-94100 Saint Maur Des Fosses (FR); LECLERC, Mathieu, F-75020 Paris (FR)
(74) Mandataire: Mercey, Fiona Susan
(86) Numéro de dépôt international: PCT/FR2013/051658
(87) Numéro de publication internationale: WO 2014/009664

(56) Documents cités:
- WO-A1-2011/089383
- WO-A1-2012/030223
- FR-A1- 2 967 485
- US-A- 3 614 872
- US-A1- 2002 059 807
- US-A1- 2009 013 868
- US-A1- 2010 326 134

## Description

La présente invention est relative à un procédé et à un appareil de séparation d'un gaz riche en dioxyde de carbone par distillation à température subambiante.

Un gaz riche en dioxyde de carbone contient au moins 60% mol. de dioxyde de carbone, voire au moins 80% mol. de dioxyde de carbone.

Le reste du gaz peut contenir un ou plusieurs des composants suivants : de l'oxygène, de l'azote, de l'argon, de l'oxyde d'azote (NO ou NO₂ ou N₂O), du monoxyde de carbone, de l'hydrogène, du mercure.

La purification peut être réalisée par une ou plusieurs étapes successives de condensation partielle et/ou par distillation.

Dans de nombreuses applications cryogéniques, la production du froid de l'unité se fait par la vaporisation d'un liquide à pression suffisamment basse pour atteindre des températures suffisamment basses. Le liquide n'étant nécessairement pas obtenu à cette pression dans le procédé, il est nécessaire de le détendre, ce qui peut générer une production de gaz. Le gaz ainsi obtenu ne va pas générer beaucoup de froid car il ne va transférer que de la chaleur sensible. Il est donc intéressant de limiter la production de gaz en sousrefroidissant le liquide avant détente.

FR2993353 présente une solution d'agencement de boîte froide d'une unité de capture de CO2 avec une séparation de la ligne d'échange en deux parties, dont une plus simple technologiquement permettant la réduction du risque de prise en glace massive de la boite froide.

FR2993187 présente une solution d'intégration des membranes cryogéniques dans la boite froide d'une unité de capture de CO₂.

US2010/326134 A1 décrit un procédé de purification d'un gaz riche en dioxyde de carbone dans lequel l'échangeur de chaleur pour vaporiser le liquide riche en dioxyde de carbone n'est pas du type tubes/ calandre et où le sousrefroidissement en amont de la vaporisation de ce liquide n'est pas optimisé.

La présente invention consiste à optimiser la ligne d'échange de la boite froide séparée en deux parties par l'ajout d'un sous refroidisseur notamment.

Selon un objet de l'invention, il est prévu un procédé selon la revendication 1.

Selon d'autres aspects facultatifs :
- le liquide du premier séparateur de phases est détendu et envoyé à un deuxième séparateur de phases ou à la colonne de distillation .
- le liquide condensé est envoyé au deuxième séparateur de phases et le liquide du deuxième séparateur de phases est envoyé en tête de la colonne de distillation pour alimenter la colonne de distillation.
- le gaz du deuxième séparateur de phases se réchauffe dans le premier échangeur.
- le gaz du deuxième séparateur de phases est séparé par perméation

Selon un autre objet de l'invention, il est prévu un appareil selon la revendication 6..

Selon d'autres aspects facultatifs, l'appareil comprend :
- des moyens pour envoyer le liquide détendu du premier séparateur de phases à un deuxième séparateur de phases ou à la colonne de distillation .
- des moyens pour envoyer du liquide condensé du deuxième échangeur à un deuxième séparateur de phases et des moyens pour envoyer le liquide du deuxième séparateur de phases en tête de la colonne de distillation pour alimenter la colonne de distillation.
- des moyens pour envoyer un gaz du deuxième séparateur de phases se réchauffer dans le premier échangeur.

Dans FR2993353, la condensation du CO₂ à la plus basse température (proche du point triple) est faite grâce à un second échangeur plus simple technologiquement. De ce fait, on choisit alors un échangeur à seulement deux passes (technologie tubes et calandre notamment). On condense donc le CO₂ contre le CO₂ issu de la colonne à distiller après sa détente pour atteindre une température proche du point triple du CO₂. Or d'autres fluides (tête de colonne à distiller, tête du dernier pot de séparation par exemple) sont aussi disponibles à des températures proches du point triple du CO₂ et ne pourront donc pas échanger leurs frigories pour condenser le CO₂ dans la partie la plus froide si l'échangeur qui y est dédié ne contient que deux passes. Si on veut utiliser ces fluides pour condenser le CO₂ et ainsi valoriser le froid de ces fluides, on devra utiliser l'échangeur principal multi-passes dont les températures sont bien plus hautes (entre -30 et -40°C environ au plus froid).

Cette solution présente des inconvénients notables :
- on valorise très mal le froid à basse température en l'échangeant contre des fluides bien plus chauds, il y a donc une perte exergétique importante qui ce traduit par des pertes énergétiques (il va être nécessaire de vaporiser plus de CO₂ liquide basse pression pour obtenir la même condensation du CO₂)
- l'écart de température dans l'échangeur multi passes entre les fluides chaud et les fluides froids va être très important : si le point froid coté chaud est à - 30°C et à -52,5°C coté froid, alors l'écart est de 22,5°C. Cet écart est très problématique compte-tenu des contraintes mécaniques occasionnées, en particulier sur le brasage si la technologie choisie est l'échangeur en matériau brasé (typique pour les applications cryogéniques et pour les échangeurs multi-passes).

Il faut donc chercher à échanger ce froid basse température contre un fluide chaud qui sera refroidi jusqu'à des températures proches.

L'invention consiste donc à transférer le froid de ces fluides vers le CO₂ qui sera vaporisé à basse pression (au bout froid de l'échangeur) qui lui échangera ensuite contre le CO₂ à liquéfier. On transmet alors le froid basse température dans la partie basse température de la boite froide, diminuant ainsi les pertes exergétiques. De plus, si on refroidit le CO₂ « basse pression » avant sa détente, on va le sous refroidir, limitant ainsi la production de gaz occasionné par sa détente. Plus de froid est alors disponible, ce qui optimise la consommation énergétique du système.

Tous les fluides froids à basses températures sont réchauffés jusqu'à une température proche de celle de la « basse pression » (à l'approche près du sous-refroidisseur). Ces fluides pourront ensuite transférer leurs frigories à plus haute température dans l'échangeur principal.

Ce sous-refroidisseur est aussi applicable dans le cas où l'on utilise des membranes cryogéniques dans la boite froide (cf FR2993187). En effet, le réchauffage de la tête de pot avant d'entrer dans les membranes et la valorisation du froid du perméat et du résidu peut se faire dans le sous-refroidisseur car ils sont à des températures plus proches du point triple du CO₂ que la température de l'échangeur principal.

L'invention proposée ici vise à permettre d'opérer au plus proche du point triple, voire même avec le CO₂ liquide au point triple.

L'invention concerne un procédé dans lequel le liquide riche en dioxyde de carbone se vaporise dans à un échangeur permettant un échange de chaleur indirect entre seulement deux fluides. Cet échangeur est un échangeur « tubes-calandre » où le CO₂ se vaporise dans la calandre et le flux à condenser partiellement se trouve dans les tubes. Le liquide bouillant se trouvant dans une calandre, il n'est plus à craindre que l'apparition d'une phase solide bouche les passages et conduise à des surpressions locales lorsque du solide se sublime entre deux bouchons de glace.

Il est donc possible d'opérer le pot à la pression du point triple pour le liquide bouillant, le CO₂ solide qui apparaît ponctuellement fondra lorsque la pression remontera au-dessus du point triple ou lorsque le liquide alimentant l'échangeur sera un peu surchauffé.

Les impuretés éventuellement présentes dans le CO₂ liquide vaporisé seront évacuées de l'échangeur :
- Soit dans la phase gazeuse pour les plus légères
- Soit dans une purge liquide pour les plus lourdes

Cette purge liquide sera évacuée de l'échangeur.

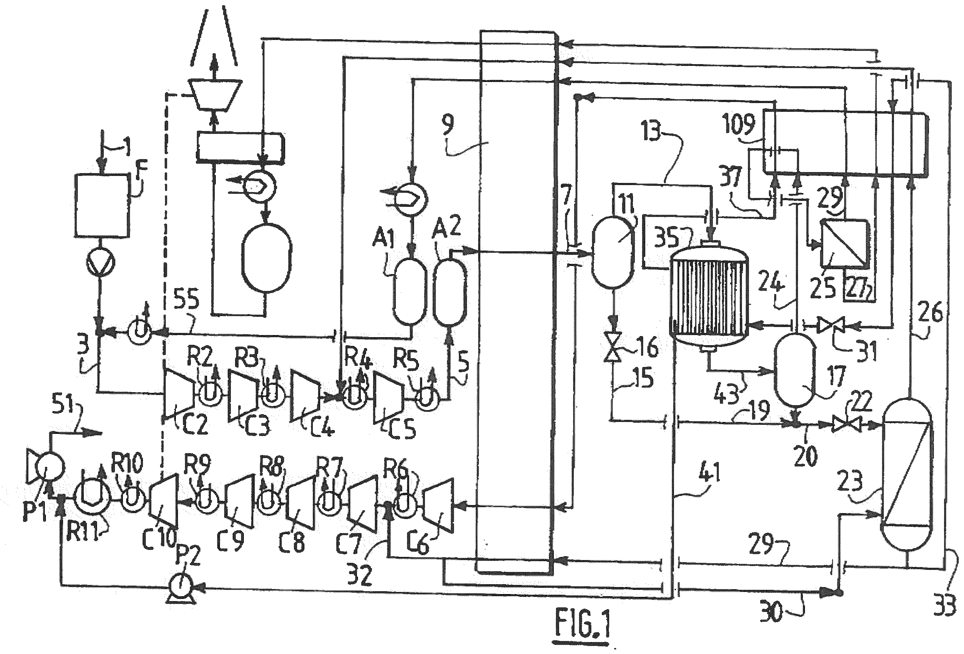

L'invention sera décrite en plus détail en se référant aux figures 1 à 3 qui représentent des procédés selon l'invention.

Dans la Figure 1, un gaz 1 contient au moins 60% mol. de dioxyde de carbone, voire au moins 80% mol. de dioxyde de carbone.

Le reste du gaz 1 peut contenir un ou plusieurs des composants suivants : de l'oxygène, de l'azote, de l'argon, de l'oxyde d'azote (NO ou NO₂ ou N₂O), du monoxyde de carbone, de l'hydrogène, du mercure.

Le gaz est filtré dans un filtre F pour enlever les poussières puis comprimé dans un premier étage de compresseur C1 pour former un débit comprimé 3. Le débit comprimé 3 est comprimé dans un deuxième étage de compression C2, refroidi dans un refroidisseur R2, comprimé dans un troisième étage de compression C3, refroidi dans un refroidisseur R3, comprimé dans un quatrième étage de compression C4, refroidi dans un refroidisseur R4, comprimé dans un cinquième étage de compression C5 et refroidi dans un refroidisseur R5 pour former un débit 5 à entre 6 et 20 bars abs. Ce débit du gaz 5 est épuré en eau dans un lit d'absorbant A2 pour former un débit épuré 7. Le débit épuré 7 est partiellement condensé dans un premier échangeur 9, qui est un échangeur en aluminium constitué par un empilement de tapis d'ondes séparé par des plaques. Le débit partiellement condensé est envoyé dans un premier séparateur de phases 11. Le gaz formé 13 est envoyé aux tubes d'un deuxième échangeur 35, permettant un échange indirect de chaleur entre seulement deux fluides, du type tubes et calandre. La figure illustre la multiplicité de tubes où se condense le gaz 13 dérivé du gaz. Le liquide formé 43 est envoyé à un deuxième séparateur de phases 17.

Un gaz 24 du deuxième séparateur de phases 17 se réchauffe dans le troisième échangeur de chaleur 109, qui est un échangeur à plaques et à ailettes. Le liquide 19 du deuxième séparateur 17 est mélangé avec le liquide 15 du premier séparateur de phases détendu dans une vanne 16 puis est détendu (débit 20) dans une vanne 22 et envoyé en tête de la colonne de distillation 23.

Un gaz de tête 26 de la colonne de distillation 23, appauvri en dioxyde de carbone mais enrichi en au moins une des impuretés (de l'oxygène, de l'azote, de l'argon, de l'oxyde d'azote (NO ou NO₂ ou N₂O), du monoxyde de carbone, de l'hydrogène), se réchauffe dans le troisième échangeur de chaleur 109 et ensuite dans le premier échangeur de chaleur 9.

Un liquide de cuve est soutiré en cuve de la colonne et refroidi dans le troisième échangeur 109. Ce liquide contient au moins 80% mol de dioxyde de carbone. Le liquide est détendu dans une vanne 31 et est ensuite envoyé à la calandre du deuxième échangeur 35 où il se vaporise partiellement. Le gaz 37 formé est réchauffé dans le troisième échangeur 109 et ensuite dans le premier échangeur 9. De là il est comprimé par un étage de compression C6 et refroidi dans un refroidisseur R6 avant d'être mélangé avec le liquide vaporisé 32. Le gaz ainsi formé est comprimé par les étages C7, C8, C9 et C10 et refroidi par les refroidisseurs R7, R8, R9, R10 et R11 afin de former un gaz condensé. Ce gaz condensé est mélangé avec la purge liquide 41 du deuxième échangeur et en partie pompé par une pompe P1 pour former un produit liquide sous pression 51, à au moins 50bars. La purge liquide 41 a précédemment été pompée dans une pompe P2.

Le gaz 24 du deuxième séparateur de phase 17 est réchauffé partiellement dans le troisième échangeur de chaleur 109, ensuite séparé par une membrane 25 pour former un perméat 29 et un non-perméat 27. Le non-perméat 27 se réchauffe dans les troisième et premier échangeurs puis est envoyé à l'air. Le perméat 29 se réchauffe dans les troisième et premier échangeurs puis sert à régénérer le lit d'adsorbant A1 qui est en régénération. Le débit 55 ayant servi à la régénération est mélangé avec le débit 3 en aval de l'étage C1.

Il est bien évidemment possible de vaporiser le liquide 33 dans le deuxième échangeur 35 par échange de chaleur indirect avec un autre fluide du procédé, par exemple une partie du liquide de cuve vaporisé.

Il est possible de réchauffer le liquide 41 ainsi pompé dans la pompe P2 avant de le mélanger avec le CO₂ liquide à température ambiante afin de récupérer les frigories de la chaleur sensible de la purge.

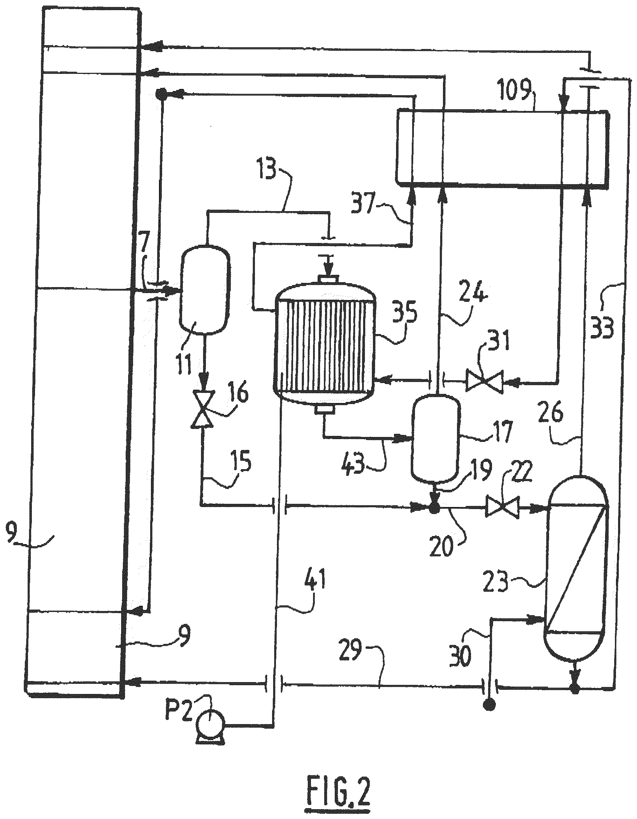

Dans la variante de la Figure 2, le gaz 24 est simplement réchauffé dans le troisième échangeur et ensuite dans le premier échangeur sans avoir été séparé par perméation.

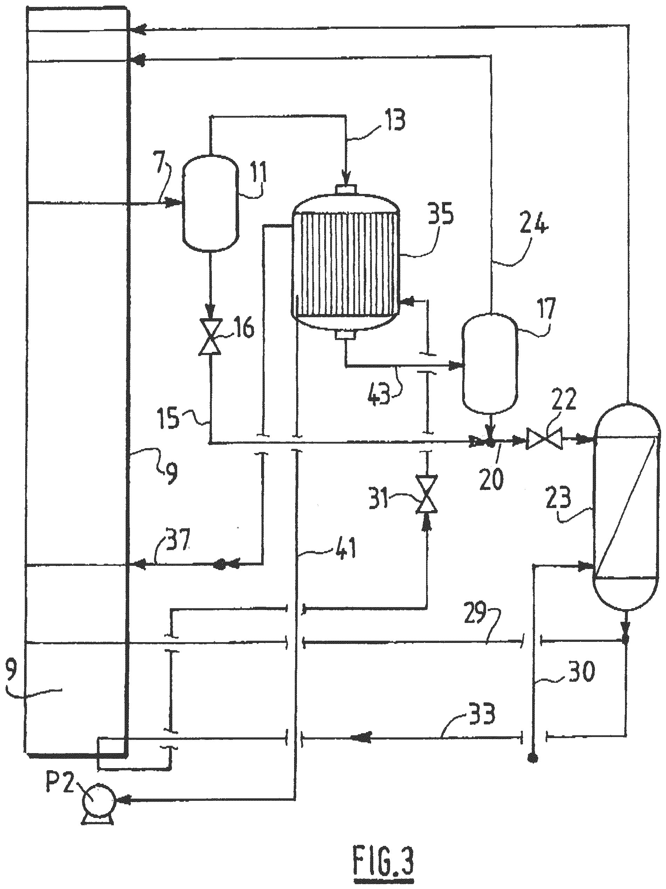

Dans la variante de la Figure 3, le procédé correspond à celui de la Figure 2 sauf que le sous-refroidisseur 109 est incorporé dans l'échangeur 9. Ainsi on voit que le liquide 33 se refroidit en parcourant partiellement l'échangeur 9 avant d'être envoyé à la vanne 31. former un débit 5 à entre 6 et 20 bars abs. Ce débit du gaz 5 est épuré en eau dans un lit d'absorbant A2 pour former un débit épuré 7. Le débit épuré 7 est partiellement condensé dans un premier échangeur 9, qui est un échangeur en aluminium constitué par un empilement de tapis d'ondes séparé par des plaques. Le débit partiellement condensé est envoyé dans un premier séparateur de phases 11. Le gaz formé 13 est envoyé aux tubes d'un deuxième échangeur 35, permettant un échange indirect de chaleur entre seulement deux fluides, du type tubes et calandre. La figure illustre la multiplicité de tubes où se condense le gaz 13 dérivé du gaz. Le liquide formé 43 est envoyé à un deuxième séparateur de phases 17.

Un gaz 24 du deuxième séparateur de phases 17 se réchauffe dans le troisième échangeur de chaleur 109, qui est un échangeur à plaques et à ailettes. Le liquide 19 du deuxième séparateur 17 est mélangé avec le liquide 19 du premier séparateur de phases détendu dans une vanne 16 puis est détendu dans une vanne 22 et envoyé en tête de la colonne de distillation 23.

Un gaz de tête 26 de la colonne de distillation 23, appauvri en dioxyde de carbone mais enrichi en au moins une des impuretés (de l'oxygène, de l'azote, de l'argon, de l'oxyde d'azote (NO ou NO₂ ou N₂O), du monoxyde de carbone, de l'hydrogène), se réchauffe dans le troisième échangeur de chaleur 109 et ensuite dans le premier échangeur de chaleur 9.

Un liquide de cuve est soutiré en cuve de la colonne et réchauffé dans le troisième échangeur 109. Ce liquide contient au moins 80% mol de dioxyde de carbone. Le liquide est détendu dans une vanne 31 et est ensuite envoyé à la calandre du deuxième échangeur 35 où il se vaporise partiellement. Le gaz 37 formé est réchauffé dans le troisième échangeur 109 et ensuite dans le premier échangeur 9. De là il est comprimé par un étage de compression C6 et refroidi dans un refroidisseur R6 avant d'être mélangé avec le liquide vaporisé 32. Le gaz ainsi formé est comprimé par les étages C7, C8, C9 et refroidi par les refroidisseurs R7, R8, R9, R10 afin de former un gaz condensé. Ce gaz condensé est mélangé avec la purge liquide 41 du deuxième échangeur et en partie pompé par une pompe P1 pour former un produit liquide sous pression 51, à au moins 50bars. La purge liquide 41 a précédemment été pompée dans une pompe P2.

Le gaz 24 du deuxième séparateur de phase 17 est réchauffé partiellement dans le troisième échangeur de chaleur 109, ensuite séparé par une membrane 25 pour former un perméat 29 et un non-perméat 27. Le non-perméat 27 se réchauffe dans les troisième et premier échangeurs puis est envoyé à l'air. Le perméat 29 se réchauffe dans les troisième et premier échangeurs puis sert à régénérer le lit d'adsorbant A1 qui est en régénération. Le débit 55 ayant servi à la régénération est mélangé avec le débit 3 en aval de l'étage C1.

Dans une alternative non couverte par la présente invention il est possible de vaporiser le liquide 33 dans le deuxième échangeur 35 par échange de chaleur indirect avec un autre fluide du procédé, par exemple une partie du liquide de cuve vaporisé.

Il est possible de réchauffer le liquide 41 ainsi pompé dans la pompe P2 avant de le mélanger avec le CO₂ liquide à température ambiante afin de récupérer les frigories de la chaleur sensible de la purge.

Dans la variante de la Figure 2, le gaz 23 est simplement réchauffé dans le troisième échangeur et ensuite dans le premier échangeur sans avoir été séparé par perméation.

Dans la variante de la Figure 3, le procédé correspond à celui de la Figure 2 sauf que le sous-refroidisseur 109 est incorporé dans l'échangeur 9. Ainsi on voit que le liquide 33 se refroidit en parcourant partiellement l'échangeur 9 avant d'être envoyé à la vanne 31.

## Revendications

1. Procédé de purification d'un gaz riche en dioxyde de carbone à basse température pour produire un fluide riche en dioxyde de carbone dans lequel :
i) le gaz riche en dioxyde de carbone est refroidi et se condense au moins partiellement dans un premier échangeur de chaleur (9) en plaques d'aluminium brasées, constitué de tapis d'ondes séparés par des plaques,
ii) le gaz riche en dioxyde de carbone partiellement condensé est envoyé à un premier séparateur de phases (11) et un liquide du premier séparateur de phases est envoyé à une étape de purification comprenant une étape de distillation (23) et/ou au moins deux étapes successives de condensation partielle (17),
iii) l'étape de purification produit un gaz appauvri en dioxyde de carbone (26) qui se réchauffe dans le premier échangeur,
iv) l'étape de purification produit un liquide riche en dioxyde de carbone (33) qui est refroidi, ensuite est détendu puis est envoyé à un deuxième échangeur de chaleur (35) qui est un échangeur à tubes et à calandre, le liquide riche en dioxyde de carbone étant envoyé se réchauffer dans la calandre où il est réchauffé au moyen du gaz (13) du premier séparateur de phases qui se condense dans les tubes pour former du liquide condensé (43), l'échangeur effectuant un échange de chaleur indirect uniquement entre le liquide riche en dioxyde de carbone et le gaz du premier séparateur de phase (11),
v) le liquide riche en dioxyde de carbone se vaporise au moins partiellement dans le deuxième échangeur et le gaz vaporisé (37) formé se réchauffe dans le premier échangeur pour former un gaz riche en dioxyde de carbone, pouvant être le produit final du procédé et
vi) le liquide (33) riche en dioxyde de carbone est refroidi avant la détente dans un troisième échangeur de chaleur (9, 109) par échange de chaleur indirect avec le gaz appauvri en dioxyde de carbone (26) qui se réchauffe dans le premier échangeur et par échange de chaleur avec le gaz (37) vaporisé dans le deuxième échangeur (35).

2. Procédé selon la revendication 1 dans lequel le gaz riche en dioxyde de carbone (37) est comprimé et condensé pour former un liquide riche en dioxyde de carbone qui est un produit final du procédé.

3. Procédé selon la revendication 1 ou 2 dans lequel le liquide (15) du premier séparateur de phases est détendu et envoyé à un deuxième séparateur de phases (17) ou à la colonne de distillation (23).

4. Procédé selon la revendication 3 dans lequel le liquide condensé est envoyé au deuxième séparateur de phases (17) et le liquide du deuxième séparateur de phases est envoyé en tête de la colonne de distillation (23) pour alimenter la colonne de distillation.

5. Procédé selon la revendication 3 ou 4 dans lequel le gaz (24) du deuxième séparateur de phases (17) se réchauffe dans le premier échangeur (9).

6. Appareil de purification d'un gaz contenant du dioxyde de carbone à basse température pour produire un fluide riche en dioxyde de carbone comprenant un premier échangeur de chaleur en plaques d'aluminium brasées (9), constitué de tapis d'ondes séparés par des plaques, un deuxième échangeur de chaleur (35) à calandre et à tubes capable de permettre un échange de chaleur indirect entre seulement deux fluides, un troisième échangeur de chaleur (109), une unité de purification comprenant au moins une colonne de distillation (23) et de préférence au moins deux séparateurs de phases (11, 17) reliés en série, une conduite pour envoyer le gaz (5) riche en dioxyde de carbone se refroidir et se condenser partiellement dans le premier échangeur, un premier séparateur de phases (11), des moyens pour envoyer le gaz refroidi au moins partiellement condensé du premier échangeur (9) au premier séparateur de phases (11), une conduite pour envoyer le liquide du premier séparateur de phase (11) à l'unité de purification, une conduite pour sortir de l'unité de purification un gaz appauvri en dioxyde de carbone (26) reliée au premier échangeur, une conduite pour sortir de l'unité de purification un liquide riche en dioxyde de carbone (33) reliée à un troisième échangeur (109) pour refroidir le liquide riche en dioxyde de carbone, une vanne (31) pour détendre le liquide refroidi dans le troisième échangeur, la vanne étant reliée au deuxième échangeur de chaleur, une conduite pour envoyer un gaz du premier séparateur de phases (13) au deuxième échangeur (35) pour vaporiser le liquide riche en dioxyde de carbone dans la calandre et pour condenser le gaz du premier séparateur de phases dans les tubes , une conduite pour envoyer le gaz (37) produit par la vaporisation du liquide riche en dioxyde de carbone dans le deuxième échangeur au premier échangeur pour se réchauffer et des moyens pour envoyer un gaz de tête (26) de la colonne de distillation (23) et le gaz (37) vaporisé dans le deuxième échangeur (35) au troisième échangeur (109) pour se réchauffer en amont du premier échangeur

7. Appareil selon la revendication 6 comprenant des moyens pour envoyer un gaz (24) dérivé du fluide de procédé autre que le gaz de tête (26) de la colonne de distillation (23) et le gaz (37) vaporisé dans le deuxième échangeur (35) au troisième échangeur (109) pour se réchauffer en amont de le premier échangeur.

8. Appareil selon la revendication 6 ou 7 comprenant des moyens pour envoyer le liquide (15) détendu du premier séparateur de phases à un deuxième séparateur de phases (17) ou à la colonne de distillation (23).

9. Appareil selon la revendication 8 comprenant des moyens pour envoyer un gaz (23) du deuxième séparateur de phases (17) se réchauffer dans le premier échangeur(E1).

10. Appareil selon l'une des revendications 6 à 9 comprenant des moyens pour envoyer du liquide condensé (43) du deuxième échangeur (35) à un deuxième séparateur de phases (17) et des moyens pour envoyer le liquide du deuxième séparateur de phases en tête de la colonne de distillation (23) pour alimenter la colonne de distillation.

## Patentansprüche

1. Verfahren zur Reinigung eines kohlendioxidreichen Gases bei niedriger Temperatur, um ein kohlendioxidreiches Fluid zu erzeugen, wobei:
i) das kohlendioxidreiche Gas gekühlt wird und zumindest teilweise in einem ersten Wärmeaustauscher (9) aus gelöteten Aluminiumplatten, bestehend aus durch Platten getrennten Wellenmatten, kondensiert,
ii) das teilweise kondensierte kohlendioxidreiche Gas in einen ersten Phasenabscheider (11) geleitet wird und eine Flüssigkeit aus dem ersten Phasenabscheider in einen Reinigungsschritt geleitet wird, der einen Destillationsschritt (23) und/oder mindestens zwei aufeinanderfolgende Teilkondensationsschritte (17) umfasst,
iii) der Reinigungsschritt ein an Kohlendioxid verarmtes Gas (26) erzeugt, das sich im ersten Austauscher erwärmt,
iv) der Reinigungsschritt eine kohlendioxidreiche Flüssigkeit (33) erzeugt, die gekühlt wird, danach entspannt wird und dann zu einem zweiten Wärmeaustauscher (35) geleitet wird, der ein Röhren- und Rohrbündelaustauscher ist, wobei die kohlendioxidreiche Flüssigkeit zur Erwärmung in das Rohrbündel geleitet wird, wo sie mittels des Gases (13) aus dem ersten Phasenabscheider erwärmt wird, das in den Rohren kondensiert, um kondensierte Flüssigkeit (43) zu bilden, wobei der Austauscher einen indirekten Wärmeaustausch ausschließlich zwischen der kohlendioxidreichen Flüssigkeit und dem Gas aus dem ersten Phasenabscheider (11) durchführt,
v) die kohlendioxidreiche Flüssigkeit zumindest teilweise in dem zweiten Austauscher verdampft und das gebildete verdampfte Gas (37) sich in dem ersten Austauscher erwärmt, um ein kohlendioxidreiches Gas zu bilden, welches das Endprodukt des Verfahrens sein kann, und
vi) die kohlendioxidreiche Flüssigkeit (33) vor der Entspannung in einem dritten Wärmeaustauscher (9, 109) durch indirekten Wärmeaustausch mit dem an Kohlendioxid verarmten Gas (26) gekühlt wird, das sich in dem ersten Austauscher erwärmt, und durch Wärmeaustausch mit dem in dem zweiten Austauscher (35) verdampften Gas (37).

2. Verfahren nach Anspruch 1, wobei das kohlendioxidreiche Gas (37) verdichtet und kondensiert wird, um eine kohlendioxidreiche Flüssigkeit zu bilden, die ein Endprodukt des Verfahrens ist.

3. Verfahren nach Anspruch 1 oder 2, wobei die Flüssigkeit (15) aus dem ersten Phasenabscheider entspannt und in einen zweiten Phasenabscheider (17) oder in die Destillationskolonne (23) geleitet wird.

4. Verfahren nach Anspruch 3, wobei die kondensierte Flüssigkeit in den zweiten Phasenabscheider (17) geleitet wird und die Flüssigkeit aus dem zweiten Phasenabscheider zum Kopf der Destillationskolonne (23) geleitet wird, um die Destillationskolonne zu versorgen.

5. Verfahren nach Anspruch 3 oder 4, wobei sich das Gas (23) aus dem zweiten Phasenabscheider (17) in dem ersten Austauscher (9) erwärmt.

6. Einrichtung zur Reinigung eines Kohlendioxid enthaltenden Gases bei niedriger Temperatur, um ein kohlendioxidreiches Fluid zu erzeugen, umfassend einen ersten Wärmeaustauscher aus gelöteten Aluminiumplatten (9), der aus durch Platten getrennten Wellenmatten besteht, einen zweiten Röhren-und Rohrbündelwärmeaustauscher (35), der in der Lage ist, einen indirekten Wärmeaustausch zwischen ausschließlich zwei Fluiden zu ermöglichen, einen dritten Wärmeaustauscher (109), eine Reinigungseinheit, die mindestens eine Destillationskolonne (23) und bevorzugt mindestens zwei in Reihe geschaltete Phasenabscheider (11, 17) umfasst, eine Leitung zum Leiten des kohlendioxidreichen Gases (5) zum Kühlen und teilweisen Kondensieren in dem ersten Austauscher, einen ersten Phasenabscheider (11), Mittel zum Leiten des gekühlten, mindestens teilweise kondensierten Gases aus dem ersten Austauscher (9) zu dem ersten Phasenabscheider (11), eine Leitung zum Leiten der Flüssigkeit aus dem ersten Phasenabscheider (11) zu der Reinigungseinheit, eine Leitung zum Abführen eines an Kohlendioxid verarmten Gases (26) aus der Reinigungseinheit, die mit dem ersten Wärmeaustauscher verbunden ist, eine Leitung zum Abführen einer kohlendioxidreichen Flüssigkeit (33) aus der Reinigungseinheit, die mit einem dritten Wärmeaustauscher (109) zum Kühlen der kohlendioxidreichen Flüssigkeit verbunden ist, ein Ventil (31) zum Entspannen der in dem dritten Wärmeaustauscher gekühlten Flüssigkeit, wobei das Ventil mit dem zweiten Wärmeaustauscher verbunden ist, eine Leitung zum Leiten eines Gases aus dem ersten Phasenabscheider (13) zu dem zweiten Austauscher (35) zum Verdampfen der kohlendioxidreichen Flüssigkeit in dem Rohrbündel und zum Kondensieren des Gases aus dem ersten Phasenabscheider in den Röhren, eine Leitung zum Leiten des durch die Verdampfung der kohlendioxidreichen Flüssigkeit in dem zweiten Austauscher erzeugten Gases (37) zu dem ersten Austauscher zum Erwärmen und Mittel zum Leiten eines Kopfgases (26) der Destillationskolonne (23) und des in dem zweiten Austauscher (35) verdampften Gases (37) zu dem dritten Austauscher (109) zur Erwärmung stromaufwärts des ersten Austauschers

7. Einrichtung nach Anspruch 6, umfassend Mittel zum Leiten eines Gases (23), das aus dem Verfahrensfluid abgeleitet ist, das nicht das Kopfgas (26) der Destillationskolonne (23) und das in dem zweiten Austauscher (35) verdampfte Gas (37) ist, zu dem dritten Austauscher (109) zur Erwärmung stromaufwärts des ersten Austauschers.

8. Einrichtung nach Anspruch 6 oder 7, umfassend Mittel zum Leiten der entspannten Flüssigkeit (15) aus dem ersten Phasenabscheider in einen zweiten Phasenabscheider (17) oder in die Destillationskolonne (23).

9. Einrichtung nach Anspruch 8, umfassend Mittel zum Leiten eines Gases (23) aus dem zweiten Phasenabscheider (17) zur Erwärmung in den ersten Austauscher (E1).

10. Einrichtung nach einem der Ansprüche 6 bis 9, umfassend Mittel zum Leiten von kondensierter Flüssigkeit (43) aus dem zweiten Austauscher (35) zu einem zweiten Phasenabscheider (17) und Mittel zum Leiten der Flüssigkeit aus dem zweiten Phasenabscheider zu dem Kopf der Destillationskolonne (23) zur Versorgung der Destillationskolonne.

## Claims

1. Method for purifying a carbon dioxide-rich gas at low temperature in order to produce a carbon dioxide-rich fluid wherein:
i) the carbon dioxide-rich gas is cooled and condensed at least partially in a first brazed aluminium plate-fin heat exchanger (9), formed of wave mats separated by plates,
ii) the partially condensed carbon dioxide-rich gas is sent to a first phase separator (11) and a liquid from the first phase separator is sent to a purification step comprising a distillation step (23) and/or at least two successive partial condensation steps (17),
iii) the purification step produces a carbon dioxide-depleted gas (26) which heats up again the first exchanger,
iv) the purification step produces a carbon-dioxide rich liquid (33) which is cooled, then is expanded then is sent to a second heat exchanger (35) which is a shell and tube exchanger, the carbon dioxide-rich liquid being sent to be heated in the shell where it is heated by means of the gas (13) of the first phase separator which condenses in the tubes to form condensed liquid (43), the exchanger carrying out an indirect heat exchange only between the carbon-dioxide rich liquid and the gas of the first phase separator (11),
v) the carbon dioxide-rich liquid vaporises at least partially in the second exchanger and the vaporised gas (37) formed is heated in the first exchanger in order to form a carbon-dioxide rich gas, that can be the end product of the method and
vi) the carbon-dioxide rich liquid (33) is cooled before the expansion in a third heat exchanger (9, 109) by indirect heat exchange with the carbon dioxide-depleted gas (26) which is heated in the first exchanger and by heat exchange with the gas (37) vaporised in the second exchanger (35).

2. Method according to claim 1 wherein the carbon-dioxide rich gas (37) is compressed and condensed in order to form a carbon-dioxide rich liquid which is an end product of the method.

3. Method according to claim 1 or 2 wherein the liquid (15) of the first phase separator is expanded and sent to a second phase separator (17) or to the distillation column (23).

4. Method according to claim 3 wherein the condensed liquid is sent to the second phase separator (17) and the liquid of the second phase separator is sent to the top of the distillation column (23) in order to supply the distillation column.

5. Method according to claim 3 or 4 wherein the gas (23) of the second phase separator (17) is heated in the first exchanger (9).

6. Apparatus for purifying a gas containing carbon dioxide at a low temperature in order to produce a carbon-dioxide rich fluid comprising a first brazed aluminium plate-fin heat exchanger (9), consisting of wave mats separated by plates, a second shell and tube heat exchanger (35) capable of allowing an indirect heat exchange between only two fluids, a third heat exchanger (109), a purification unit comprising at least one distillation column (23) and preferably at least two phase separators (11, 17) connected in series, a duct for sending the carbon dioxide-rich gas (5) to be cooled and condensed partially in the first exchanger, a first phase separator (11), means for sending the cooled gas at least partially condensed from the first exchanger (9) to the first phase separator (11), a duct for sending the liquid from the first phase separator (11) to the purification unit, a duct for exiting from the purification unit a carbon dioxide-depleted gas (26) connected to the first exchanger, a duct for exiting from the purification unit a carbon-dioxide rich liquid (33) connected to a third exchanger (109) to cool the carbon dioxide-rich liquid, a valve (31) for expanding the liquid cooled in the third exchanger, with the valve being connected to the second heat exchanger, a duct for sending a gas from the first phase separator (13) to the second exchanger (35) to vaporise the carbon dioxide-rich liquid in the shell and to condense the gas from the first phase separator in the tubes, a duct for sending the gas (37) produced by the vaporisation of the carbon-dioxide rich liquid in the second exchanger to the first exchanger to be heated and means for sending a top gas (26) of the distillation column (23) and the gas (37) vaporised in the second exchanger (35) to the third exchanger (109) to be heated upstream from the first exchanger.

7. Apparatus according to claim 6 comprising means for sending a gas (23) derived from the fluid of the method other than the top gas (26) of the distillation column (23) and the gas (37) vaporised in the second exchanger (35) to the third exchanger (109) to be cooled upstream from the first exchanger.

8. Apparatus according to claim 6 or 7 comprising means for sending the liquid (15) expanded from the first phase separator to a second phase separator (17) or to the distillation column (23).

9. Apparatus according to claim 8 comprising means for sending a gas (23) from the second phase separator (17) to be heated in the first exchanger (E1).

10. Apparatus according to one of claims 6 to 9 comprising means for sending condensed liquid (43) from the second exchanger (35) to a second phase separator (17) and means for sending the liquid from the second phase separator at the top of the distillation column (23) in order to supply the distillation column.
